(19) Europäisches Patentamt
European Patent Office
Office européen des brevets

(11) **EP 3 308 895 B1**

(12) **EUROPEAN PATENT SPECIFICATION**

(45) Date of publication and mention
of the grant of the patent:
**13.09.2023 Bulletin 2023/37**

(51) International Patent Classification (IPC):
**B23K 9/18** (2006.01)　　　　**B23K 9/095** (2006.01)

(21) Application number: **16807126.4**

(52) Cooperative Patent Classification (CPC):
**B23K 9/18; B23K 9/095; B23K 9/184; B23K 9/188**

(22) Date of filing: **08.06.2016**

(86) International application number:
**PCT/JP2016/002786**

(87) International publication number:
**WO 2016/199419 (15.12.2016 Gazette 2016/50)**

(54) **MULTI-ELECTRODE SUBMERGED ARC WELDING METHOD AND WELD JOINT MANUFACTURING METHOD**

LICHTBOGENSCHWEISSVERFAHREN MIT MEHREREN ELEKTRODEN UND IM UNTERTAUCHEN

PROCÉDÉ DE SOUDAGE À L'ARC, MULTI-ÉLECTRODES ET SUBMERGÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2015 JP 2015117242**

(43) Date of publication of application:
**18.04.2018 Bulletin 2018/16**

(73) Proprietor: **JFE Steel Corporation**
**Tokyo 100-0011 (JP)**

(72) Inventors:
• **KOZUKI, Shohei**
**Tokyo 100-0011 (JP)**
• **HAYAKAWA, Naoya**
**Tokyo 100-0011 (JP)**
• **OI, Kenji**
**Tokyo 100-0011 (JP)**

(74) Representative: **Grünecker Patent- und**
**Rechtsanwälte**
**PartG mbB**
**Leopoldstraße 4**
**80802 München (DE)**

(56) References cited:
EP-A1- 0 077 640　　　JP-A- S5 868 468
JP-A- H06 328 254　　　JP-A- H07 266 046
US-B2- 7 091 446　　　US-B2- 8 895 896

**EP 3 308 895 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 308 895 B1**

**Description**

TECHNICAL FIELD

The disclosure relates to a multi-electrode submerged arc welding method and a weld joint manufacturing method.

BACKGROUND

Multi-electrode submerged arc welding used when welding steel sheets can increase penetration depth and weld metal content by supplying high current. Multi-electrode submerged arc welding is therefore a more efficient welding technique than single-electrode submerged arc welding, and is widely used as a suitable welding technique for fabricating structures related to shipbuilding, construction, energy transportation, and so on.

In multi-electrode submerged arc welding, a plurality of power supplies are typically used by combining alternating current (AC) power supplies and direct current (DC) power supplies. Particularly in the case of combining AC power supplies, weldability varies depending on the wire (connection) for taking in the u phase, v phase, and w phase of three-phase AC current on the primary side.

Various types of connections for taking in three-phase AC current are available. The welding stability during welding and the shape of weld metal (bead) after welding vary greatly depending on the connection, i.e. the phase difference in AC current between the electrodes (see the Japan Welding Engineering Society, Ships, Offshore and Steel Structure Division, Welding Procedure Committee: Welding Procedure "Q & A", p. 91 (March 1991) (NPL 1)). Known connections effective in improving the welding stability and the weld metal shape in multi-electrode submerged arc welding include a Scott connection, a V connection, and an inverted V connection. With these connections, the behavior of the arc of each electrode oscillating due to an electromagnetic force during welding is relatively stable, so that the welding stability and the weld metal shape are improved.

Further multi-electrode submerged arc welding methods are disclosed in US 8 895 896 B2 and US 7 091 446 B2.

CITATION LIST

Non-patent Literatures

NPL 1: the Japan Welding Engineering Society, Ships, Offshore and Steel Structure Division, Welding Procedure Committee: Welding Procedure "Q & A", p. 91 (March 1991)

SUMMARY

(Technical Problem)

With the Scott connection, the V connection, or the inverted V connection, AC currents whose phases are deviated alternately by 120° obtained from the u phase, v phase, and w phase of three-phase AC current taken in from the primary side, AC currents with a lagging phase of 90° because of the self-induction action of coils, and the like are combined to determine the phase difference in AC current between the electrodes. In detail, the phase difference takes discontinuous specific values such as 60°, 90°, 120°, 135°, and 150°.

Arc oscillation during welding is mainly caused by the electromagnetic force generated by AC current. The electromagnetic force is significantly dependent on the phase difference in AC current between the electrodes. Hence, the Scott connection, the V connection, the inverted V connection, or the like has conventionally been employed depending on welding conditions as a connection that reduces the electromagnetic force from among the above-mentioned discontinuous specific values.

With the welding method of selecting the phase difference in AC current from among the discontinuous specific values, however, the electromagnetic force generated between the electrodes may not be able to be sufficiently reduced to prevent arc oscillation. It is thus difficult to perform multi-electrode submerged arc welding under optimal welding conditions even when the Scott connection, the V connection, the inverted V connection, or the like is employed.

It could be helpful to provide a multi-electrode submerged arc welding method that can prevent arc oscillation during welding to improve the welding stability and the weld metal (bead) shape, suppress blowing up of gas during welding, and reduce defects in the weld metal (hereafter referred to as "weld defects").

It could also be helpful to provide a weld joint manufacturing method of welding steel sheets by the multi-electrode submerged arc welding method, and a weld joint obtained by the weld joint manufacturing method.

2

(Solution to Problem)

We focused attention on a digitally controlled welding power supply capable of freely controlling the phase of AC current, in order to find such welding conditions in multi-electrode submerged arc welding that effectively prevent arc oscillation during welding.

The use of a digitally controlled welding power supply in multi-electrode submerged arc welding was conventionally not considered for reasons such as the following:

(a) In welding with high current, it is difficult to digitally control phases.

(b) In submerged arc welding where the arc is not visible, it is difficult to study the interaction between the oscillation of the arc and the phase of the welding current.

(c) In multi-electrode submerged arc welding, the electromagnetic force of each electrode influences the arc, which causes complex arc oscillation. Analyzing it requires significant time.

We, however, assumed the following:

(A) A digitally controlled welding power supply capable of freely controlling not only the phase of current but also the waveform and frequency of AC current is an effective means in preventing arc oscillation in multi-electrode submerged arc welding.

(B) It is possible to find optimal welding conditions by analyzing experimental data using analysis technology and computing technology which have been enhanced considerably in recent years.

We thus conducted experiments while varying the frequency, waveform, waveform balance, and waveform offset of welding current as AC current, and analyzed the resulting data to make a detailed study of optimal welding conditions in multi-electrode submerged arc welding using a digitally controlled welding power supply.

Consequently, we discovered the following:

- An effective way of reducing the variation of the electromagnetic force acting on the arc column at the wire tip which is a main cause of arc oscillation is to appropriately control, using a digitally controlled welding power supply, i.e. a welding power supply capable of controlling the waveform of welding current, the maximum value and average value of the electromagnetic force acting on the arc column at the wire tip of each electrode except the first electrode that is the front electrode in the direction in which welding progresses (hereinafter, referred to as the welding direction) during welding, in relation to the number of electrodes. In this way, the welding stability and the weld metal shape can be improved effectively.

- By ensuring predetermined relationships for the maximum value and average value of the electromagnetic force and the standard deviation of the electromagnetic force, weld defects can be reduced and gas blowing up during welding can be suppressed effectively, in addition to improving the welding stability and the weld metal shape.

The disclosure is based on these discoveries and further studies.

We thus provide a multi-electrode arc welding method and a weld joint manufacturing method as specified in the appended claims.

(Advantageous Effect)

It is thus possible to prevent the oscillation of the arc of each electrode in multi-electrode submerged arc welding more effectively. This improves the welding stability and the weld metal shape, yielding a significantly advantageous effect in industrial terms. Moreover, by preventing the oscillation of the arc of each electrode, the molten weld pool can be kept from vibrating during welding. This has an advantageous effect of reducing weld defects (e.g. slag inclusion, undercut in a bead toe portion, etc.) and suppressing gas blowing up during welding.

BRIEF DESCRIPTION OF THE DRAWINGS

In the accompanying drawings:

FIG. 1 is a side view schematically illustrating an electromagnetic force acting on the arc column at the wire tip of the ith electrode in a multi-electrode submerged arc welding method according to one of the disclosed embodiments;

FIG. 2 is a sectional view schematically illustrating an example of a groove shape to which the multi-electrode submerged arc welding method according to one of the disclosed embodiments is applied;

FIG. 3 is a graph illustrating an example of phase $\Psi_i$ and waveform offset $A_i$ in the case where the welding current of the ith electrode is a sine curve wave in the multi-electrode submerged arc welding method according to one of the disclosed embodiments; and

FIG. 4 is a graph illustrating an example of phase $\Psi_i$, waveform offset $A_i$, and duty ratio $B_i$ in the case where the welding current of the ith electrode is a square wave in the multi-electrode submerged arc welding method according to one of the disclosed embodiments.

DETAILED DESCRIPTION

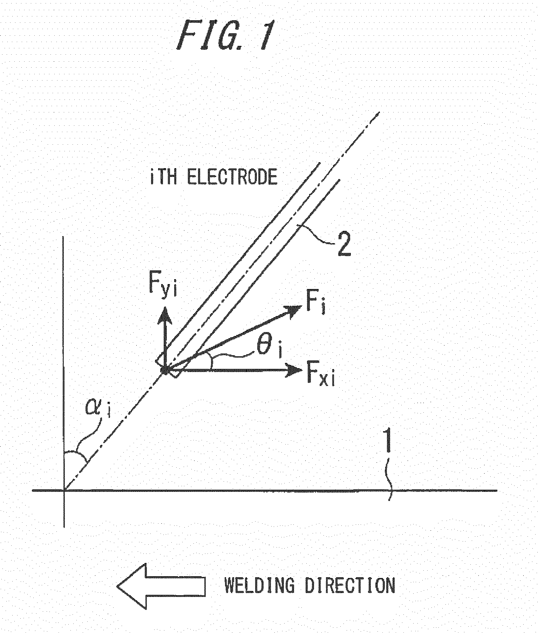

FIG. 1 is a side view schematically illustrating an electromagnetic force $F_i$ acting on the arc column at the tip of a wire 2 of the ith electrode when welding a steel sheet I using a multi-electrode submerged arc welding method according to one of the disclosed embodiments. In FIG. 1, $F_i$ denotes the electromagnetic force (N/m) acting on the arc column at the tip of the wire 2, $F_{xi}$ denotes the component of F, in the x-axis direction (horizontal direction), and $F_{yi}$ denotes the component of F, in the y-axis direction (vertical direction). In addition, $\theta_i$ denotes the angle (rad) between a horizontal line (a horizontal line in the welding direction) and $F_i$, and $\alpha_i$ denotes the angle (rad) between the central axis of the wire 2 and a vertical line. Hereafter $\alpha$ is referred to as "electrode angle". The arc column is not illustrated in FIG. 1.

Let $I_i$ (A) be the welding current of the ith electrode, $I_j$ (A) be the welding current of the jth electrode, $\alpha_j$ (rad) be the electrode angle of the jth electrode, and $L_{ij}$ (m) be the distance between the ith electrode and the jth electrode. Then, $F_{xi}$ is calculated according to the following Expression (4). In the expression, $\mu$ is magnetic permeability (N/A$^2$). The magnetic permeability in the air (= $1.257 \times 10^{-6}$N/A$^2$) is used here.

$$F_{xi} = [(\mu I_i)/(2\pi)]\cos\alpha_i \times \sum_{j \neq i}^{n}[(I_j / L_{ij})\cos\alpha_j] \qquad \ldots (4).$$

Let $S_i$ (m) be the distance from the surface of the steel sheet I to the wire tip of the ith electrode. Then, $F_{yi}$ is calculated according to the following Expression (5):

$$F_{yi} = [(\mu I_i)/(2\pi S_i)]\sin\alpha_i \times \sum_{j \neq i}^{n} I_j \qquad \ldots (5).$$

With such calculated $F_{xi}$ and $F_{yi}$, $F_i$ and $\theta_i$ can be obtained according to the following Expressions (6) and (7) respectively:

$$F_i = (F_{xi}^2 + F_{yi}^2)^{1/2} \qquad \ldots (6)$$

$$\theta_i = \tan^{-1}(F_{yi}/F_{xi}) \qquad \ldots (7).$$

The values yielded using these expressions are instantaneous values. Let $F_{imax}$ (N/m) be the maximum value of $F_i$ from the start to end of the welding. An average value $F_{iave}$ (N/m) can be obtained by integrating the value of $F_i$ at time t from the start to end of the welding by the time required for the welding (hereafter also referred to as "welding time T") and dividing the integrated value by the welding time T, as indicated in the following Expression (8):

$$F_{iave} = \frac{1}{T}\int_0^T F_i dt \qquad \ldots (8).$$

In the multi-electrode submerged arc welding method according to one of the disclosed embodiments, it is important that, for each of the second to nth electrodes (n: an integer of 3 to 5) except the first electrode that is the front electrode in the welding direction, welding is performed by adjusting the phase difference of the welding current (i.e. AC current) and the like so that $F_{imax}$ and $F_{iave}$ satisfy the relationship in the following Expression (1), using, as a welding power supply, a welding power supply capable of controlling the waveform of the welding current such as a digitally controlled welding power supply:

$$(F_{imax}/F_{iave}) - 1 \leq 0.3(n-1) \qquad \dots (1)$$

where n is the number of electrodes, and i is an integer of 2 to n.

By performing welding under such conditions, the oscillation of the arc of each electrode can be prevented effectively, with it being possible to improve the welding stability and the weld metal shape.

It is also necessary to, when $\sigma_{Fi}$ (N/m) denotes the standard deviation of the electromagnetic force $F_1$, perform welding by adjusting the phase difference of the welding current and the like so that $F_{imax}$, $F_{iave}$, and $\sigma_{Fi}$ satisfy the relationship in the following Expression (2):

$$F_{imax} \leq F_{iave} + 2\sigma_{Fi} \qquad \dots (2).$$

By performing welding under such conditions, the molten weld pool can be kept from vibrating during welding, with it being possible to reduce weld defects and suppress gas blowing up during welding.

The standard deviation ($\sigma_{Fi}$ (N/m) of the electromagnetic force $F_i$ is the square root of the value obtained by subtracting the average value $F_{iave}$ from the value of $F_i$ at time t from the start to end of the welding, squaring the difference and integrating the square by the welding time, and dividing the integrated value by the welding time T, as indicated in the following Expression (9):

$$\sigma_{Fi} = \sqrt{\frac{1}{T}\int_0^T (F_i - F_{iave})^2\,dt}$$

$$\dots (9).$$

Regarding the foregoing Expression (1), it is preferable to satisfy the following relationship:

$$(F_{imax}/F_{iave}) - 1 \leq 0.2(n-1).$$

Although no lower limit is set, the lower limit is typically about 0.1.

Regarding the foregoing Expression (2), it is preferable to satisfy the following relationship:

$$F_{imax} \leq F_{iave} + 1.5\sigma_{Fi}.$$

Although no lower limit is set, the lower limit is typically about $F_{iave} + 1.0\sigma_{Fi}$.

The number n of electrodes is not limited, but is 3 to 5.

The first electrode is the front electrode (i.e. located first) in the welding direction from among the n electrodes, with the subsequent electrodes being referred to as the second to nth electrodes in the order of arrangement in the welding direction. The nth electrode is therefore the last electrode in the welding direction.

The welding current of the first electrode is not limited. Since there is no constraint on its phase, the welding current of the first electrode is preferably DC current. Meanwhile, the second to nth electrodes are subjected to the above-mentioned control, and so AC current is supplied as the welding current using a welding power supply capable of controlling the waveform of welding current such as a digitally controlled welding power supply.

Thus, while DC current is supplied only to the first electrode, AC current is supplied to the second to nth electrodes so that the relationships in the foregoing Expressions (1) and (2) are simultaneously satisfied for the maximum value, average value, and standard deviation of the electromagnetic force acting on the arc column at the wire tip of each of the second to nth electrodes. In this way, the oscillation of the arc of each electrode can be effectively prevented to improve the welding stability and the weld metal shape, while ensuring stable penetration depth. Moreover, the molten weld pool can be kept from vibrating during welding, to reduce weld defects and suppress gas blowing up during welding.

To actually perform the multi-electrode submerged arc welding method according to one of the disclosed embodiments, such settings that satisfy the foregoing Expressions (I) and (2) may be determined beforehand using an analysis device or a computing device. For example, in the case where the welding current is a sine curve wave, the welding current, the welding voltage, the frequency, the phase, and the waveform offset are set for each electrode. In the case where the welding current is a square wave, the duty ratio is set in addition to the welding current, the welding voltage, the frequency, the phase, and the waveform offset for each electrode.

Let $\sigma_{0i}$ (rad) be the standard deviation of the angle $\theta_i$ (rad) between the electromagnetic force $F_i$ acting on the arc column at the wire tip of the ith electrode during welding and the horizontal line. Then, $\sigma_{0i}$ preferably satisfies the relationship in the following Expression (3). The angle $\theta_i$ between the electromagnetic force $F_i$ and the horizontal line is the angle (rad) between $F_i$ (the direction of $F_i$) and the horizontal line in the welding direction, as illustrated in FIG. 1.

$$\sigma_{\theta i} \leq \pi/2 \qquad \qquad \dots (3).$$

By controlling the standard deviation $\sigma_{0i}$ (rad) of the angle $\theta_i$ (rad) between the electromagnetic force $F_i$ in the ith electrode and the horizontal line within the range in Expression (3), arc oscillation can be suppressed more effectively. This enhances the effect of improving the welding stability and the weld metal shape. In addition, particularly the vibration of the molten weld pool during welding can be suppressed effectively. This enhances the effect of reducing weld defects and suppressing gas blowing up during welding.

The standard deviation $\sigma_{0i}$ (rad) of the angle $\theta_i$ (rad) between the electromagnetic force F, and the horizontal line is the square root of the value obtained by subtracting the average value $\theta_{iave}$ of $\theta_i$ from the value of $\theta_i$ at time t from the start to end of the welding, squaring the difference and integrating the square by the welding time, and dividing the integrated value by the welding time T, as indicated in the following Expression (10):

$$\sigma_{\theta i} = \sqrt{\frac{1}{T}\int_{0}^{T}(\theta_i - \theta_{iave})^2 dt}$$

$$\dots (10).$$

The waveform of the welding current supplied to each electrode, in particular the second to nth electrodes, is preferably a sine curve wave or a square wave. The use of the digitally controlled welding power supply enables forming the waveform of the welding current and controlling its phase more advantageously. Of welding currents of various waveforms, a sine curve wave is most preferable because it not only is easy to control but also facilitates the application of related equipment, like commercial current. A square wave is preferable because it is a simple waveform similar to a sine curve wave and waveform generation, phase control, and the like are relatively easy.

By butt welding steel sheets using the multi-electrode submerged arc welding method according to one of the disclosed embodiments, a weld joint with excellent weld metal shape (i.e. bead shape) can be yielded. Moreover, the oscillation of the arc of each electrode during the welding can be prevented to improve the welding stability, reduce weld defects, and suppress gas blowing up.

The groove shape is not limited, and may be a shape (e.g. Y groove, I groove) used in typical butt welding. The multi-electrode submerged arc welding method according to one of the disclosed embodiments is also applicable in the case of performing X-groove butt welding by inside and outside single-layer welding. In the case of using the multi-electrode submerged arc welding method according to one of the disclosed embodiments in sheet joint welding, V groove is preferable. In the case of using the multi-electrode submerged arc welding method according to one of the disclosed embodiments in fillet welding, T groove is preferable. In the case of using the multi-electrode submerged arc welding method according to one of the disclosed embodiments in angle welding, single-bevel groove is preferable.

The groove angle and the groove depth are set so as to obtain a right amount of weld metal. In detail, if the groove angle is excessively small, an arc forms from the wall surface of the groove and the welding becomes unstable. If the groove angle is excessively large, it is difficult to fill the groove with weld metal. The groove angle is therefore preferably 45° to 90°. The groove depth is set so that the space portion of the groove is filled with weld metal without excess or deficiency, by estimating the amount of weld metal based on welding heat input in multi-electrode submerged arc welding. The volume of the space portion of the groove can be calculated from the sheet thickness t (mm) of the steel sheets, the groove angle $\beta$ (°), and the groove depth h (mm).

EXAMPLES

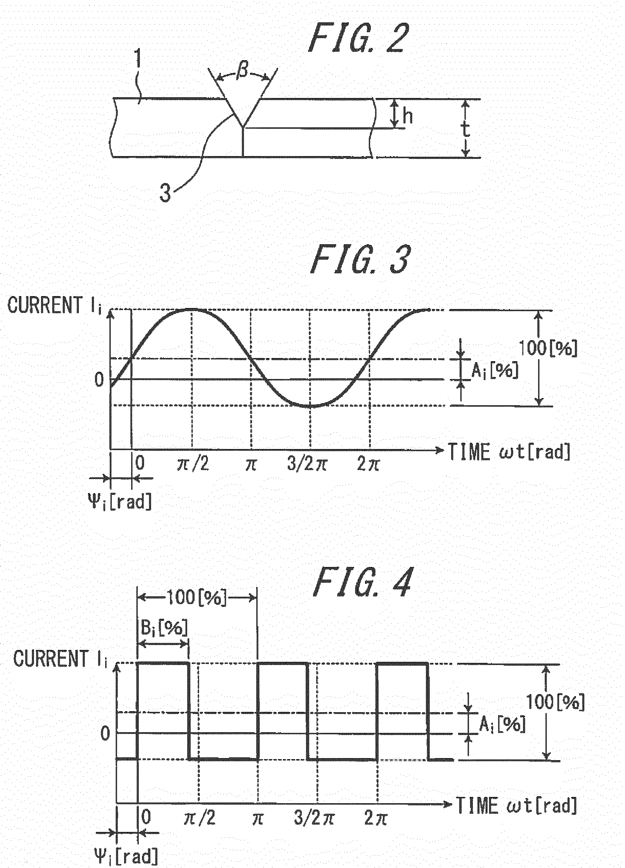

As illustrated in FIG. 2, steel sheets I were butted to form a groove 3, and multi-electrode submerged arc welding was performed to obtain a butt joint. The groove 3 was Y groove, with a groove angle $\beta$ of 60° and a groove depth h of 12 mm so that the space portion was filled with weld metal without excess or deficiency. The sheet thickness t of the steel sheets I was 36 mm to prevent burn through to the back side.

Using two to five electrodes in multi-electrode submerged arc welding, butt welding was performed while varying the polarity, waveform, welding current I (A), welding voltage E (V), frequency f (Hz), phase $\Psi$ (rad), waveform offset A (%), and duty ratio B (%) of each electrode. Tables I and 2 list the set conditions. FIG. 3 illustrates an example of phase $\Psi_i$ and waveform offset $A_i$ in the case where the welding current of the ith electrode is a sine curve wave. FIG. 4 illustrates an example of phase $\Psi_i$, waveform offset $A_i$, and duty ratio $B_i$ in the case where the welding current of the ith electrode is a square wave.

Table 1

| Weld No. | Number of electrodes | First electrode | | | | | | | | Second electrode | | | | | | | | Third electrode | | | | | | | |
|---|---|---|---|---|---|---|---|---|---|---|---|---|---|---|---|---|---|---|---|---|---|---|---|---|---|
| | | Polarity | Waveform | $I_1$ (A) | $E_1$ (V) | $f_1$ (Hz) | $\Psi_1$ (°) | $A_1$ (%) | $B_1$ (%) | Polarity | Waveform | $I_2$ (A) | $E_2$ (V) | $f_2$ (Hz) | $\Psi_2$ (°) | $A_2$ (%) | $B_2$ (%) | Polarity | Waveform | $I_3$ (A) | $E_3$ (V) | $f_3$ (Hz) | $\Psi_3$ (°) | $A_3$ (%) | $B_3$ (%) |
| 1 | 5 | DC | - | 1200 | 32 | - | - | 0 | - | AC | Sine | 1000 | 34 | 60 | 0 | 0 | - | AC | Sine | 800 | 36 | 60 | 90 | 0 | - |
| 2 | 5 | DC | - | 1200 | 32 | - | - | 0 | - | AC | Square | 1000 | 34 | 34 | -29 | -12 | 72 | AC | Square | 800 | 36 | 76 | -122 | 18 | 58 |
| 3 | 5 | DC | - | 1200 | 32 | - | - | 0 | - | AC | Square | 1000 | 34 | 88 | 3 | 18 | 28 | AC | Square | 800 | 36 | 40 | 33 | -15 | 48 |
| 4 | 5 | DC | - | 1200 | 32 | - | - | 0 | - | AC | Square | 1000 | 34 | 52 | 145 | -8 | 35 | AC | Square | 800 | 36 | 52 | -110 | 25 | 72 |
| 5 | 4 | DC | - | 1200 | 32 | - | - | 0 | - | AC | Sine | 1000 | 34 | 60 | 0 | 0 | - | AC | Sine | 800 | 36 | 60 | 90 | 0 | - |
| 6 | 4 | DC | - | 1200 | 32 | - | - | 0 | - | AC | Square | 1000 | 34 | 64 | 52 | -25 | 68 | AC | Square | 800 | 36 | 88 | -17 | 5 | 52 |
| 7 | 4 | DC | - | 1200 | 32 | - | - | 0 | - | AC | Square | 1000 | 34 | 16 | 19 | 25 | 45 | AC | Sine | 800 | 36 | 70 | 110 | -18 | - |
| 8 | 4 | DC | - | 1200 | 32 | - | - | 0 | - | AC | Square | 1000 | 34 | 64 | -6 | 15 | 25 | AC | Square | 800 | 36 | 64 | -29 | 5 | 42 |
| 9 | 3 | DC | - | 1000 | 32 | - | - | 0 | - | AC | Sine | 800 | 34 | 60 | 0 | 0 | - | AC | Sine | 600 | 34 | 60 | 90 | 0 | - |
| 10 | 3 | DC | - | 1000 | 32 | - | - | 0 | - | AC | Square | 800 | 34 | 46 | -64 | 25 | 28 | AC | Square | 600 | 34 | 40 | 52 | 15 | 68 |
| 11 | 3 | DC | - | 1000 | 32 | - | - | 0 | - | AC | Square | 800 | 34 | 52 | -17 | 22 | 32 | AC | Square | 600 | 34 | 34 | -180 | 5 | 58 |
| 12 | 3 | DC | - | 1000 | 32 | - | - | 0 | - | AC | Square | 800 | 34 | 46 | 64 | 5 | 25 | AC | Square | 600 | 34 | 46 | 76 | -2 | 75 |

Table 2

| Weld No. | Number of electrodes | Fourth electrode | | | | | | | | Fifth electrode | | | | | | | | Welding speed (mm/min) |
|---|---|---|---|---|---|---|---|---|---|---|---|---|---|---|---|---|---|---|
| | | Polarity | Waveform | 14 (A) | $E_4$ (V) | $f_4$ (Hz) | $\Psi_4$ (°) | $A_4$ (%) | $B_4$ (%) | Polarity | Waveform | $I_5$ (A) | $E_5$ (V) | $f_5$ (Hz) | $\Psi_5$ (°) | A5 (%) | B5 (%) | |
| 1 | 5 | AC | Sine | 600 | 38 | 60 | 180 | 0 | - | AC | Sine | 400 | 40 | 60 | 270 | 0 | - | 1600 |
| 2 | 5 | AC | Square | 600 | 38 | 94 | 145 | 5 | 28 | AC | Square | 400 | 40 | 88 | -75 | -18 | 25 | 1600 |
| 3 | 5 | AC | Square | 600 | 38 | 22 | 59 | -2 | 58 | AC | Square | 400 | 40 | 88 | 73 | 8 | 52 | 1600 |
| 4 | 5 | AC | Square | 600 | 38 | 52 | -110 | -15 | 65 | AC | Square | 400 | 40 | 46 | -87 | -22 | 65 | 1600 |
| 5 | 4 | AC | Sine | 600 | 38 | 60 | 180 | 0 | - | - | - | - | - | - | - | - | - | 1400 |
| 6 | 4 | AC | Square | 600 | 38 | 88 | 157 | -12 | 28 | - | - | - | - | - | - | - | - | 1400 |
| 7 | 4 | AC | Square | 600 | 38 | 28 | 134 | -22 | 65 | - | - | - | - | - | - | - | - | 1400 |
| 8 | 4 | AC | Square | 600 | 38 | 16 | 87 | 2 | 72 | - | - | - | - | - | - | - | - | 1400 |
| 9 | 3 | - | - | - | - | - | - | - | - | - | . | - | - | - | - | - | - | 900 |
| 10 | 3 | - | - | - | - | - | - | - | - | - | - | - | - | - | - | - | - | 900 |
| 11 | 3 | - | - | - | - | - | - | - | - | - | - | - | - | - | - | - | - | 900 |
| 12 | 3 | - | - | - | - | - | - | - | - | - | - | - | - | - | - | - | - | 900 |

Table 3 lists $F_{imax}$, $F_{iave}$, $\sigma_{Fi}$, and $\sigma_{0i}$ in the set conditions in Tables I and 2.

Table 3

| Weld No. | $F_{imax}$(N/m) | | | | | $F_{iave}$(N/m) | | | | | $\sigma_{Fi}$(N/m) | | | | | $\sigma_{0i}$(rad) | | | | |
|---|---|---|---|---|---|---|---|---|---|---|---|---|---|---|---|---|---|---|---|---|
| | $F_{1max}$ | $F_{2max}$ | $F_{3max}$ | $F_{4max}$ | $F_{5max}$ | $F_{1ave}$ | $F_{2ave}$ | $F_{3ave}$ | $F_{4ave}$ | $F_{5ave}$ | $\sigma_{F1}$ | $\sigma_{F2}$ | $\sigma_{F3}$ | $\sigma_{F4}$ | $\sigma_{F5}$ | $\sigma_{01}$ | $\sigma_{02}$ | $\sigma_{03}$ | $\sigma_{04}$ | $\sigma_{05}$ |
| 1 | 10.0 | 15.8 | 10.7 | 7.0 | 2.4 | 6.4 | 7.3 | 5.0 | 2.9 | 1.1 | 3.1 | 4.8 | 3.1 | 2.0 | 0.7 | 1.57 | 1.99 | 1.36 | 1.20 | 0.75 |
| 2 | 19.8 | 24.7 | 17.6 | 10.0 | 3.9 | 12.1 | 11.6 | 9.7 | 5.5 | 1.9 | 4.3 | 7.4 | 4.7 | 2.0 | 0.7 | 1.13 | 1.55 | 1.61 | 0.93 | 0.54 |
| 3 | 26.8 | 27.2 | 22.9 | 8.8 | 2.8 | 15.6 | 13.5 | 12.7 | 5.6 | 2.1 | 6.6 | 9.4 | 5.5 | 2.4 | 0.4 | 1.13 | 1.47 | 1.85 | 0.75 | 0.40 |
| 4 | 18.1 | 23.9 | 16.6 | 9.0 | 3.6 | 10.4 | 15.3 | 11.3 | 6.2 | 2.5 | 5.9 | 7.5 | 3.7 | 2.6 | 0.8 | 1.41 | 1.26 | 1.05 | 0.75 | 0.44 |
| 5 | 10.4 | 16.0 | 10.5 | 6.2 | - | 6.7 | 7.3 | 5.3 | 2.6 | - | 3.2 | 4.9 | 3.1 | 1.7 | - | 1.57 | 1.97 | 1.26 | 1.01 | - |
| 6 | 18.0 | 21.7 | 13.6 | 7.8 | - | 12.9 | 12.1 | 8.2 | 4.5 | - | 3.5 | 7.8 | 3.2 | 1.3 | - | 1.10 | 1.92 | 1.27 | 0.60 | - |
| 7 | 18.1 | 22.3 | 13.2 | 7.6 | - | 11.1 | 15.1 | 7.5 | 5.4 | - | 3.5 | 6.3 | 6.0 | 2.0 | - | 1.59 | 1.68 | 1.44 | 0.70 | - |
| 8 | 18.7 | 23.0 | 16.3 | 7.2 | - | 14.7 | 13.4 | 13.2 | 5.9 | - | 3.3 | 5.4 | 3.9 | 1.4 | - | 1.33 | 0.96 | 0.96 | 0.80 | - |
| 9 | 8.1 | 9.0 | 4.9 | - | - | 5.1 | 5.0 | 2.6 | - | - | 2.5 | 3.0 | 1.1 | - | - | 1.57 | 1.76 | 1.13 | - | - |
| 10 | 14.4 | 15.5 | 11.7 | - | - | 9.1 | 9.8 | 7.4 | - | - | 3.2 | 6.2 | 2.1 | - | - | 1.12 | 1.62 | 1.22 | - | - |
| 11 | 15.8 | 14.1 | 9.4 | - | - | 10.0 | 9.5 | 6.9 | - | - | 3.8 | 4.4 | 3.0 | - | - | 0.98 | 1.71 | 1.12 | - | - |
| 12 | 10.2 | 12.4 | 7.8 | - | - | 7.5 | 10.6 | 6.6 | - | - | 2.4 | 2.8 | 1.9 | - | - | 1.34 | 1.12 | 1.05 | - | - |

To evaluate the welding stability, the weld metal shape, and the like in the case of performing multi-electrode submerged arc welding under each set condition, penetration depth stability, bead width stability, gas blowing up during welding, and weld defects after welding were examined.

Penetration depth stability was evaluated as follows:

"excellent" in the case where the variation of the penetration depth per 10m of the welding length was less than $\pm 1$ mm;
"good" in the case where the variation of the penetration depth per 10 m of the welding length was $\pm 1$ mm or more and less than $\pm 2$ mm; and
"poor" in the case where the variation of the penetration depth per 10 m of the welding length was $\pm 2$ mm or more.

Bead width stability was evaluated as follows:

"excellent" in the case where the standard deviation of the bead width per 10 m of the welding length was less than I mm;
"good" in the case where the standard deviation of the bead width per 10 m of the welding length was 1 mm or more and less than 2 mm; and "poor" in the case where the standard deviation of the bead width per 10 m of the welding length was 2 mm or more.

Gas blowing up during welding was evaluated as follows:

"excellent" in the case where no blowing up occurred;
"good" in the case where the blowing up frequency was less than 0.2 times per second; and
"poor" in the case where the blowing up frequency was 0.2 times or more per second.

Weld defects were, through X-ray observation on the inside of the weld metal, evaluated as follows:

"excellent" in the case where no defect exceeding 2 mm was observed;
"good" in the case where the number of defects exceeding 2 mm per 10 m of the welding length was less than 0.2; and
"poor" in the case where the number of defects exceeding 2 mm per 10 m of the welding length was 0.2 or more.
Table 4 lists the results.

Table 4

| Weld No. | Evaluation result | | | | Relationship in expression | | | Remarks |
|---|---|---|---|---|---|---|---|---|
| | Penetration depth stability | Bead width stability | Gas blowing up | Weld defect | Expression (1) | Expression (2) | Expression (3) | |
| 1 | Good | Poor | Poor | Poor | not satisfied | not satisfied | not satisfied | Comparative Example |
| 2 | Good | Good | Poor | Poor | satisfied | not satisfied | not satisfied | Comparative Example |
| 3 | Excellent | Excellent | Good | Good | satisfied | satisfied | not satisfied | Example |
| 4 | Excellent | Excellent | Excellent | Good | satisfied | satisfied | satisfied | Example |
| 5 | Good | Poor | Poor | Poor | not satisfied | not satisfied | not satisfied | Comparative Example |
| 6 | Good | Good | Poor | Poor | satisfied | not satisfied | not satisfied | Comparative Example |
| 7 | Excellent | Good | Good | Good | satisfied | satisfied | not satisfied | Example |
| 8 | Excellent | Excellent | Excellent | Excellent | satisfied | satisfied | satisfied | Example |
| 9 | Good | Poor | Poor | Poor | not satisfied | not satisfied | not satisfied | Comparative Example |
| 10 | Good | Good | Poor | Poor | satisfied | not satisfied | not satisfied | Comparative Example |
| 11 | Excellent | Excellent | Good | Good | satisfied | satisfied | not satisfied | Example |
| 12 | Excellent | Excellent | Excellent | Excellent | satisfied | satisfied | satisfied | Example |

EP 3 308 895 B1

For each of Expressions (1), (2), and (3) in Table 4, "good" indicates that the relationship in the expression was satisfied, and "poor" indicates that the relationship in the expression was not satisfied.

As is clear from Table 4, weld Nos. 1, 5 and 9 as Comparative Examples did not satisfy any of the relationships in Expressions (1) and (2), and so the bead width varied greatly, and also gas blowing up occurred during welding and a lot of weld defects appeared.

Weld Nos. 2, 6 and 10 as Comparative Examples satisfied the relationship in Expression (1) but did not satisfy the relationship in Expression (2), and so gas blowing up occurred during welding and a lot of weld defects appeared.

Weld Nos. 3, 4, 7, 8, 11 and 12 as Examples satisfied the relationships in Expressions (1) and (2), and so penetration depth stability and bead width stability increased, and gas blowing up during welding and weld defects were suppressed.

In particular, weld Nos. 4, 8 and 12 satisfied the relationship in Expression (3) in addition to Expressions (1) and (2), so that penetration depth stability and bead width stability further increased, and gas blowing up during welding and weld defects were suppressed more effectively.

REFERENCE SIGNS LIST

1    steel sheet

2    wire

3    groove

**Claims**

1. A multi-electrode submerged arc welding method using a plurality of electrodes,
   wherein for each of a second electrode to an nth electrode except a first electrode that is a front electrode in a welding direction where n is an integer of 3 to 5:

   a digitally controlled welding power supply capable of controlling a waveform of a welding current is used; and when a maximum value of an electromagnetic force $F_i$ acting on an arc column at a wire tip of an ith electrode during welding is denoted by $F_{imax}$ in N/m, an average value of the electromagnetic force $F_i$ is denoted by $F_{iave}$ in N/m, and a standard deviation of the electromagnetic force $F_i$ is denoted by $\sigma_{Fi}$ in N/m, welding is performed so that $F_{imax}$, $F_{iave}$, and $\sigma_{Fi}$ satisfy relationships in the following Expressions (1) and (2):

   $$(F_{imax}/F_{iave}) - 1 \leq 0.3(n - 1) \qquad \ldots (1)$$

   $$F_{imax} \leq F_{iave} + 2\sigma_{Fi} \qquad \ldots (2)$$

   where n is the number of the plurality of electrodes, and i is an integer of 2 to n.

2. The multi-electrode submerged arc welding method according to claim 1,
   wherein when a standard deviation of an angle $\theta_i$ in rad between the electromagnetic force $F_i$ and a horizontal line is denoted by $\sigma_{\theta i}$ in rad, $\sigma_{\theta i}$ satisfies a relationship in the following Expression (3):

   $$\sigma_{\theta i} \leq \pi/2 \qquad \ldots (3).$$

3. The multi-electrode submerged arc welding method according to claim 1 or 2,
   wherein the waveform of the welding current is set to any of a sine curve wave and a square wave.

4. A weld joint manufacturing method of welding steel sheets by the multi-electrode submerged arc welding method according to any one of claims 1 to 3.

**Patentansprüche**

1. Verfahren zum Unterpulver-Lichtbogenschweißen mit mehreren Elektroden, bei dem eine Vielzahl von Elektroden eingesetzt wird,

   wobei für jede von einer zweiten Elektrode bis zu einer n-ten Elektrode mit Ausnahme einer ersten Elektrode, die eine vordere Elektrode in einer Schweißrichtung ist, wobei n eine ganze Zahl von 3 bis 5 ist, eingesetzt wird:

   eine digital gesteuerte Schweiß-Stromversorgung, die in der Lage ist, eine Wellenform des Schweißstroms zu steuern; und

   wenn ein Maximalwert einer elektromagnetischen Kraft $F_i$, die auf eine Lichtbogensäule an einer Drahtspitze einer i-ten Elektrode während des Schweißens wirkt, mit $F_{imax}$ in N/m angegeben wird, ein Durchschnittswert der elektromagnetischen Kraft $F_i$ mit $F_{iave}$ in N/m angegeben wird und eine Standardabweichung der elektromagnetischen Kraft $F_i$ mit $\sigma_{Fi}$ in N/m angegeben wird, das Schweißen so durchgeführt wird, dass für $F_{imax}$, $F_{iave}$ und $\sigma_{Fi}$ Beziehungen in den folgenden Ausdrücken (1) und (2) gelten:

   $$(F_{imax}/F_{iave}) - 1 \leq 0{,}3(n - 1) \qquad\qquad (1)$$

   $$F_{imax} \leq F_{iave} + 2\,\sigma_{Fi} \qquad\qquad (2),$$

   wobei n die Anzahl der Vielzahl von Elektroden ist und i eine ganze Zahl von 2 bis n ist.

2. Verfahren zum Unterpulver-Lichtbogenschweißen mit mehreren Elektroden nach Anspruch 1,

   wobei, wenn eine Standardabweichung eines Winkels $\theta_i$ in rad zwischen der elektromagnetischen Kraft $F_i$ und einer horizontalen Linie mit $\sigma_{\theta i}$ in rad angegeben wird, für $\sigma_{\theta i}$ die Beziehung des folgenden Ausdrucks (3) gilt:

   $$\sigma_{\theta i} \leq \pi/2 \qquad\qquad (3).$$

3. Verfahren zum Unterpulver-Lichtbogenschweißen mit mehreren Elektroden nach Anspruch 1 oder 2,

   wobei die Wellenform des Schweißstroms auf eine Sinuskurvenwelle oder eine Rechteckwelle eingestellt wird.

4. Verfahren zum Herstellen von Schweißverbindung, bei dem Stahlbleche mit dem Verfahren zum Unterpulver-Lichtbogenschweißen mit mehreren Elektroden nach einem der Ansprüche 1 bis 3 geschweißt werden.


**Revendications**

1. Procédé de soudage à l'arc submergé multi-électrodes utilisant une pluralité d'électrodes,

   dans lequel pour chacune d'une seconde électrode à une n-ième électrode à l'exception d'une première électrode qui est une électrode avant dans une direction de soudage où n est un nombre entier de 3 à 5 :

   une alimentation électrique de soudage à commande numérique capable de commander une forme d'onde d'un courant de soudage est utilisée ; et

   lorsqu'une valeur maximale d'une force électromagnétique $F_i$ agissant sur une colonne d'arc au niveau d'une pointe de fil d'une i-ième électrode pendant le soudage est désignée $F_{imax}$ en N/m, une valeur moyenne de la force électromagnétique $F_i$ est désignée $F_{iave}$ en N/m, et un écart type de la force électromagnétique $F_i$ est désigné $\sigma_{Fi}$ en N/m, le soudage est effectué de manière à ce que $F_{imax}$, $F_{iave}$, et $\sigma_{Fi}$ satisfont à des relations dans les Expressions (1) et (2) suivantes :

   $$(F_{imax}/F_{iave}) - 1 \leq 0{,}3(n - 1) \qquad \ldots (1)$$

   $$F_{imax} \leq F_{iave} + 2\sigma_{Fi} \qquad \ldots (2)$$

   où n est le nombre de la pluralité d'électrodes, et i est un nombre entier de 2 à n.

2. Procédé de soudage à l'arc submergé multi-électrodes selon la revendication 1, dans lequel lorsqu'un écart type d'un angle $\theta_i$ en rad entre la force électromagnétique $F_i$ et une ligne horizontale est désigné par $\sigma_{\theta i}$ en rad, $\sigma_{\theta i}$ satisfait à une relation dans l'Expression suivante (3) :

$$\sigma_{\theta i} \leq \pi/2 \qquad\qquad \dots (3).$$

3. Procédé de soudage à l'arc submergé multi-électrodes selon la revendication 1 ou 2,
dans lequel la forme d'onde du courant de soudage est établie à l'une quelconque d'une onde de courbe sinusoïdale et d'une onde carrée.

4. Procédé de fabrication de joints soudés pour souder des tôles d'acier par le procédé de soudage à l'arc submergé multi-électrodes selon l'une quelconque des revendications 1 à 3.

*FIG. 1*

iTH ELECTRODE

2

$F_{yi}$

$F_i$

$\theta_i$

$F_{xi}$

$\alpha_i$

1

WELDING DIRECTION

## FIG. 2

## FIG. 3

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8895896 B2

- US 7091446 B2

**Non-patent literature cited in the description**

- Welding Procedure Committee: Welding Procedure "Q & A. Japan Welding Engineering Society, Ships, Offshore and Steel Structure Division, March 1991, 91